# DEMANDE DE BREVET EUROPEEN

(11) **EP 1 054 325 A1**
(43) Date de publication de la demande: **22.11.2000**
(21) Numéro de dépôt: 00401345.4
(22) Date de dépôt: 17.05.2000
(51) Int. Cl.: G06F 9/50, G06F 17/30

(54) **Procédé d'optimisation, dans un système informatique, du transfert de données entre une application cliente et un serveur**

(30) Priorité: 19.05.1999 FR 9906354
(71) Demandeur: BULL S.A., 78430 Louveciennes (FR)
(72) Inventeur: Andrei, Pierre, 75001 Paris (FR); Bui-Xuan, Hoan, 75020 Paris (FR)

(57) **Abrégé**

La présente invention a pour objet un procédé d'optimisation du flux de données entre au moins une application cliente et au moins un système de gestion de requêtes incluant au moins un objet possédant des états et valeurs susceptibles d'être modifier, ladite application cliente émettant au moins deux requêtes successives d'interrogation d'états ou de valeurs d'objets inclus dans un système de gestion, la communication entre une application cliente et un système de gestion s'effectuant par l'intermédiaire d'un système de communication. Ce procédé est caractérisé en ce que
- à l'initialisation, le système de gestion transmet à l'application cliente, sur demande de l'application cliente, un ensemble d'objets incluant tout ou partie des objets inclus dans le système de gestion,
- et suite à une requête d'interrogation de l'application cliente, le système de gestion transmet à l'application cliente les éventuelles modifications incluant les états et/ou valeurs d'au moins un objet de cet ensemble qui ont été modifiés,
- une autre requête d'interrogation de l'application cliente étant transmise après un laps de temps T déterminé donnant au moins la possibilité à l'application cliente de terminer le traitement de la réponse de la première requête.

## Description

### Domaine technique

La présente invention a pour objet un procédé d'optimisation, dans un système informatique, du transfert de données entre au moins un client et au moins un serveur. Le système informatique est indifféremment un système hétérogène ou non, distribué ou non.

Par définition, une application est dite conçue selon une architecture "client/serveur" lorsqu'elle se compose de deux programmes indépendants qui coopèrent l'un avec l'autre à la réalisation d'un même traitement, chacun s'exécutant dans un environnement propre (machine, système d'exploitation), une interface programmative utilisant un langage constitué de commandes permettant de maîtriser leur dialogue.

Egalement, dans une architecture client/serveur, des clients et des serveurs coexistent et dialoguent sous forme de requête. Une application cliente désigne, de manière générale, un programme qui prend en compte les données émises par un utilisateur et soumet ces données sous forme de requête à un autre programme associé à un serveur. En d'autres termes, une requête transite d'une application cliente vers un système de gestion qui offre le service demandé. Ce service offre un service de traitement correspondant à la requête émise. En général, le traitement comprend un accès en lecture ou une mise à jour sur une base connue de l'homme du métier.

Le mode client/serveur a l'avantage de permettre à un utilisateur (par exemple d'un simple micro-ordinateur) appelé client de confier une partie de sa tâche ou de ses opérations à effectuer à un serveur. De cette manière, le client dispose d'une capacité de calcul beaucoup plus importante que celle de son micro-ordinateur. De même, une application cliente peut s'adresser à un serveur spécialisé et sous-traiter efficacement une opération, le serveur se trouvant dans des conditions de réalisation et de compétence optimales de par sa spécialisation.

Dans ce système informatique, un système de gestion particulièrement bien adapté à l'invention peut être un système de gestion de machines d'un système informatique de type OPENMASTER (marque déposée par la société BULL S.A.). Ce système utilise des services CMIS (Common Managment Information Services) normalisés, connus de l'homme du métier. Ce système de gestion peut être assimilé à un ensemble de services qui interagissent entre eux pour donner une représentation virtuelle du monde réel qui est le système informatique. C'est une représentation virtuelle qu'un administrateur manipule (surveillance, action) pour gérer le monde réel. La représentation virtuelle porte sur des objets virtuels du monde réel et constitue un modèle objet. Cette représentation virtuelle est concrétisée par l'intermédiaire d'un arbre de contenance. L'invention ne se limite pas à ce type de serveur mais s'applique à tout serveur de requêtes.

Dans ce système de type OPENMASTER, le transfert de données s'effectue entre une machine cliente et au moins une machine de type serveur de requêtes dit système de gestion. Le terme gestion sera utilisé pour être conforme à la traduction Afnor (Association Française de NORmalisation) de « Management ». Les machines sont reliées entre elles par l'intermédiaire d'un réseau LAN (Local Area Network), WAN (Wide Area Network) ou INTERNET. Ce système peut être distribué ou non, hétérogène ou non.

Les systèmes de gestion peuvent entretenir des relations hiérarchiques. Ainsi, un système de gestion peut être subordonné à un autre système de gestion.

Rappelons qu'un système distribué est un environnement de système informatique qui fonctionne au moyen d'au moins deux systèmes d'exploitation identiques ou différents. Une machine est associée à un système d'exploitation. Une machine comprend au moins une ressource physique (par exemple des réseaux, des concentrateurs, des segments, etc.) ou logique (par exemple une base de données, etc.). Rappelons également qu'un système informatique hétérogène contient en général une variété de protocoles de gestion. Dans ce système, chaque machine est associée à au moins un protocole de gestion.

L'application cliente est incluse sur une machine cliente qui peut être par exemple une station de travail, un ordinateur personnel, etc. Dans la suite de la description, le client sera représenté par une station de travail.

L'arbre comprend en ses noeuds l'ensemble des objets gérés par le système de gestion. Par définition, un objet géré est une vue abstraite, définie pour les besoins de gestion, d'une ressource logique ou physique d'un système. Un attribut est une caractéristique d'un objet géré qui a un type nommé et une valeur. La valeur d'un attribut d'un objet peut être consultée ou modifiée par une requête adressée à l'objet.

Dans un système informatique de type OPENMASTER, au moins un agent est, en général situé sur une machine du système informatique. Un agent traite des requêtes qui lui sont adressées. Un agent logiciel gère et met à jour des données sur la machine sur laquelle il est situé dans autre arbre de contenance. Chaque agent peut supporter un protocole tel que le protocole SNMP (Simple Network Managment Protocol), le protocole CMIP (Common Managment Information Protocol), le protocole DSAC (Distributed Systems Administration and Control) ou d'autres protocoles.

Le système de gestion comprend également plusieurs agents en nombre égal au nombre de protocoles de gestion existant dans le système informatique. Les agents inclus dans le système de gestion sont généralement nommés « agents intégrateurs » en ce sens qu'ils sont intégrés au système de gestion. Les agents et les agents intégrateurs du (des) système(s) de gestion coexistent et communiquent pour masquer l'hétérogénéité du réseau.

### L'art antérieur

Dans une telle architecture informatique de type Client/Serveur, les valeurs ou les états d'objets, qui sont gérés et mis à jour au sein du système de gestion, sont transmis aux applications clientes. Ainsi, une application cliente incluse dans cette machine, pourra être informé des changements de valeurs ou d'états de ces objets, les visualiser, et effectuer des actions.

Entre (un ou) plusieurs applications clientes et un système de gestion, il y a un flux d'information constitué de valeurs et d'états d'objets gérés par le système de gestion. L'application cliente doit être mis à jour de ces états et valeurs d'objets afin de réagir de façon rapide et efficace. Cependant, dans le cas où l'application cliente utilise un grand nombre de valeurs et états d'objets du système de gestion, le flux de données entre le système de gestion et l'application cliente peut s'avérer très important et conduire non seulement à un engorgement au sein de l'application cliente, mais aussi, à saturer le système de communication entre les applications clientes et le système de gestion.

Une première solution consiste en ce que le système de gestion envoie pour chaque objet demandé par une application cliente l'état ou la valeur de l'objet à ce client. Ainsi, lorsque le système de gestion détecte un changement d'état ou de valeur d'un objet, il envoie cet état ou la valeur de l'objet vers (le ou) les applications clientes intéressées par cet objet. Le gros problème est que si le nombre d'objets est très grand, le flux de données entre le système de gestion et l'application cliente peut être ainsi très grand et risque d'engorger l'application cliente et le système de communication entre le système de gestion et les applications clientes.

Une deuxième solution consiste à ce que le système de gestion envoie non pas une valeur ou un état d'objet mais des valeurs ou des états correspondant à un ensemble d'objets vers l'application cliente. Le système de gestion envoie ces valeurs ou états de façon régulière, par exemple toutes les n secondes, et lorsqu'au moins un objet a changé d'état ou de valeur. Cette solution ne tient pas compte de l'état d'activité de l'application cliente. Ainsi, une application cliente qui est saturé, peut recevoir toutes les n secondes un ensemble de valeurs d'objets sans pouvoir les traiter.

Une troisième solution consiste en ce que l'application cliente envoie de façon régulière, par exemple toute les n secondes, des requêtes sur chacun des objets afin de connaître l'état des objets gérés par le système de gestion. Le problème est que si le nombre d'objets est grand, le nombre de requêtes vers le système de gestion sera grand, en conséquence le flux de données entre l'application cliente et le système de gestion sera grand. Un autre problème est que cette solution ne tient pas compte de l'état d'engorgement de l'application cliente. En effet, un grand nombre de requêtes peut être émis sans tenir compte des requêtes qui sont en cours de traitement sur l'application cliente.

### L'invention

Un premier but est de pouvoir transférer aux clients les changement de valeurs ou d'états d'objets gérés dans un système de gestion de façon efficace en prenant soin de ne pas engorger l'application cliente et le système de communication entre le système de gestion et l'application cliente.

Un deuxième but visé est de procurer au système un procédé de communication entre le système de gestion et l'application cliente simple et général.

A cet effet, l'invention a pour objet un procédé d'optimisation du flux de données entre au moins une application cliente et au moins un système de gestion de requêtes incluant au moins un objet possédant des états et valeurs susceptibles d'être modifier, ladite application cliente émettant au moins deux requêtes d'interrogation d'états ou de valeurs d'objets inclus dans un système de gestion, la communication entre une application cliente et un système de gestion s'effectuant par l'intermédiaire d'un système de communication, caractérisé en ce que
- à l'initialisation, le système de gestion transmet à l'application cliente, sur demande de l'application cliente, un ensemble d'objets incluant tout ou partie des objets inclus dans le système de gestion,
- et suite à une requête d'interrogation de l'application cliente, le système de gestion transmet à l'application cliente les éventuelles modifications incluant les états et/ou valeurs d'au moins un objet de cet ensemble qui ont été modifiés,
- une autre requête d'interrogation de l'application cliente étant transmise après un laps de temps donnant au moins la possibilité à l'application cliente de terminer le traitement de la réponse de la première requête.

L'invention sera mieux comprise à la lecture de la description qui suit donnée à titre d'exemple et faite en référence aux dessins annexés.

### Dans les dessins:

Pour simplifier la description, dans les dessins les mêmes éléments portent les mêmes références.
- la figure 1 est une vue synoptique de l'architecture d'un système informatique sur lequel peut s'appliquer la présente solution ;

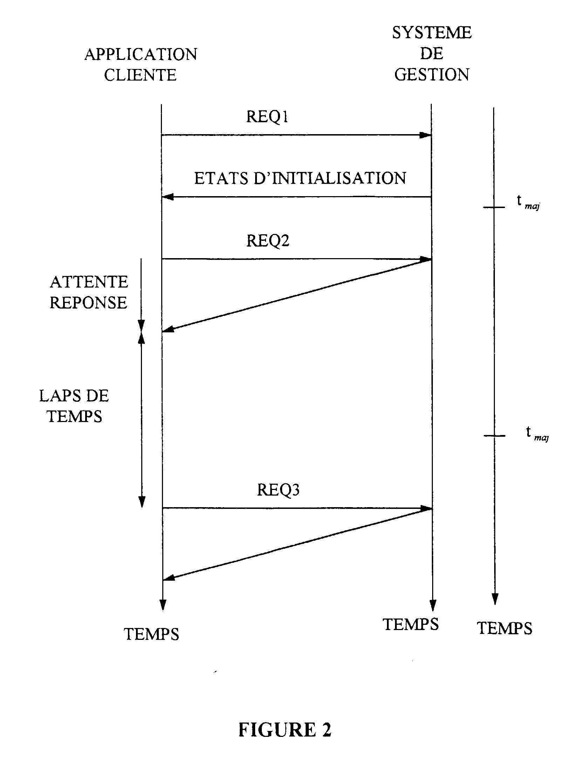

- la figure 2 est une vue schématique du flux d'informations entre une application cliente et un système de gestion.

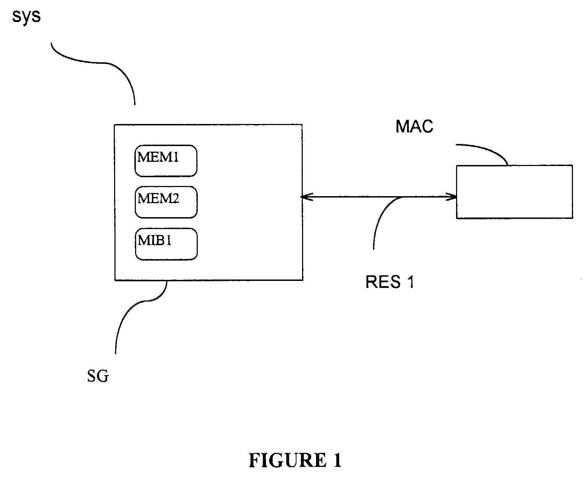

Sur la figure 1, on a représenté un système informatique SYS à environnement distribué de type hétérogène. Dans l'exemple illustré, ce système SYS inclut au moins un système de gestion OpenMaster SG, au moins une station distante MAC, par exemple de type JAVA. De préférence, cette station JAVA est une machine Windows NT munie d'un navigateur standard dit « Internet Explorer » connu de l'homme du métier. Des programmes en langage JAVA nommés « applets » sont chargés et exécutés sur cette station. L'utilisation de ce type de station a pour avantage pour l'utilisateur une interface machine bien connu. Cette station cliente inclut une application cliente.

Le système comprend au moins un processeur PRO et des moyens de mémoire MEM affectés à la station de travail et au système de gestion SG.

Dan l'exemple de réalisation, le système de gestion SG supporte des services de type CMIS (Common Managment Information service) normalisés conforme au modèle OSI connu de l'homme du métier.

Le système de gestion SG comprend également au moins un agent intégrateur associé à un protocole de gestion afin de masquer l'hétérogénéité du système informatique. Un agent intégrateur est de type logiciel.

Naturellement, le système de gestion SG peut comprendre plusieurs agents intégrateurs. L'agent intégrateur Al1 est relié à un agent de même type situé sur la station par l'intermédiaire d'un réseau RES1. Le réseau RES1 peut être un réseau LAN (Local Area Network) ou WAN (Wide Area Network) ou INTERNET. Un ensemble de couches logicielles s'interpose entre le système de gestion SG et le réseau RES1, et entre le réseau RES1 et la station MAC. Cet ensemble de couches logicielle repose sur le modèle OSI (Open System Interconnection) d'architecture en couche de l'ISO (International Organization for Standardization), connu de l'homme du métier. Pour des raisons de simplification de la description, cet ensemble de couches logicielles n'est pas représenté sur la figure 1.

Le système de gestion SG comprend aussi un arbre de contenance MIB1 gérée par l'agent intégrateur. Dans l'exemple illustré, l'arbre MIB1 comprend n objets OBJ1-OBJn incluant chacun des propriétés comprenant des valeurs et des états susceptibles d'être modifiées dans le temps suite à des requêtes ou opérations sur ces objets. Les propriétés d'un objet sont notamment définies par :
- au moins un attribut
- au moins une action que cet objet peut exécuter
- le comportement de cet objet suite aux sollicitations externes
- au moins une notification que l'objet doit émettre pour signaler des événements.

Dans l'administration des systèmes et réseaux, un ensemble d'opérateurs inclus dans l'application cliente surveillent des ressources informatiques (machines, routeurs, imprimantes...) par le biais d'une application graphique, inclus dans la station, qui représente l'état de ces ressources. L'état ou les valeurs caractérisant ces ressources sont stockées au sein du système de gestion. L'application graphique permet de visualiser les objets OBJ1-OBJ3. L'application graphique, utilisée par l'opérateur, peut être par exemple une application cliente qui ira demander l'état et les valeurs d'objets au système de gestion.

L'arbre MIB1 assure une représentation virtuelle du monde réel qui entoure le système de gestion SG. C'est une représentation virtuelle que l'utilisateur UT ou que l'administrateur manipule (surveillance, action) pour gérer le monde réel. La représentation virtuelle porte sur des objets virtuels du monde réel et constitue un modèle objet. Dans l'exemple illustré, le monde réel est matérialisé par des machines (non représentées sur la figure qui entourent) telles que la station MAC.

Plusieurs manipulations peuvent s'appliquer sur les attributs. Les opérations incluent les commandes « get attribute value » ou encore « replace attribute value ». De même, des opérations peuvent s'appliquer sur des objets. Les opérations peuvent être du type :
- « Create » pour la création d'un objet d'une classe
- « Delete » pour demander à un objet géré de se détruire
- « Action » pour demander à un objet d'exécuter une action spécifiée dans la définition de la classe.

Cet ensemble de manipulations ont pour conséquence de modifier l'état et/ou valeurs des objets. A cet effet, un service inclus dans le système de gestion a pour rôle de mettre à jour l'arbre de contenance. De préférence, cette mise à jour est réalisée à des instants déterminés t_{*maj*}, et à intervalle régulier.

Le problème, tel que mentionné en introduction de la description, est que le flux de données entre le système de gestion SG et l'application cliente peut être très grand et le risque d'engorgement de l'application cliente et du système de communication est grand.

Une solution a ce problème a pour objet un procédé d'optimisation du flux de données. Selon le procédé,
- à l'initialisation, le système de gestion transmet à l'application cliente, sur demande de l'application cliente, un ensemble d'objets incluant tout ou partie des objets inclus dans le système de gestion,
- et suite à une requête d'interrogation de l'application cliente, le système de gestion transmet à l'application cliente les éventuelles modifications incluant les états et/ou valeurs d'au moins un objet de cet ensemble qui ont été modifiés,
- une autre requête d'interrogation de l'application cliente étant transmise après un laps de temps donnant au moins la possibilité à l'application cliente de terminer le traitement de la réponse de la première requête.

Le flux est optimisé en ce sens que l'application cliente est maître du dialogue entre lui-même et le système de gestion. En d'autres mots, le système de gestion n'émet de réponses que sur demande de l'application cliente.

Dans notre exemple de réalisation, le procédé de l'invention comprend des étapes d'initialisation :

### Etape 1 :

Lors d'une première étape d'initialisation, un utilisateur de l'application cliente émet une requête REQ1 propre à informer le système de gestion SG de la liste d'objets qu'elle utilise parmi l'ensemble des objets existants de l'arbre de contenance MIB1. Dans l'exemple illustré, l'application cliente utilise les objets OBJ1, OBJ2 et OBJ3 parmi n objets de l'arbre de contenance MIB1.

### Etape 2 :

Le système de gestion enregistre cette information dans une mémoire quelconque MEM1.

### Etape 3 :

Le système de gestion transmet la liste d'objets demandée par l'application cliente ainsi que l'état et valeurs de ces objets. Les états de ces objets émis à l'initialisation sont définis comme étant les états d'initialisation.

A compter de la transmission des états d'initialisation, le service inclus dans le système de gestion contrôle en permanence l'état et valeur des objets OBJ1-OBJ3 et détecte tout changement d'état et/ou valeur de ces objets sur les différentes machines du réseau pour mettre à jour l'arbre de contenance MIB1 qui lui est associé. Si une modification de l'état ou valeur d'un objet est détectée entre deux requêtes de l'application cliente, le système de gestion extrait l'objet concerné par un changement d'état et l'enregistre dans une mémoire MEM2, par exemple une mémoire tampon. De manière générale, la mémoire MEM2 stocke tous les objets dont l'état et/ou la valeur à changer entre deux requêtes.

De cette façon, l'application cliente peut effectuer une unique requête au système de gestion SG demandant les états et les valeurs des objets modifiés, le système de gestion transmettant uniquement les objets présents dans la mémoire MEM2. Notons que la requête REQ2 émise par l'application cliente ne concerne pas l'état ou les valeurs d'un unique objet mais d'un ensemble d'objets. L'application cliente reçoit toutes les valeurs et états des objets qui ont été modifiées et peut mettre à jour sa base de données avec les nouvelles valeurs des objets dont les valeurs et états ont été modifiées. Cette mise à jour nécessite un temps de mis à jour dit de rafraîchissement de l'application graphique des objets qui ont été modifiés.

L'application cliente émet donc une seule requête d'interrogation vers le système de gestion, lui demandant toutes les valeurs ou d'objets qui ont changé d'état depuis la dernière requête reçue par le système de gestion.

De plus, dès l'instant où le système de gestion reçoit une requête d'interrogation de l'application cliente, le système de gestion émet aussitôt les objets modifiés qui se trouvent dans la mémoire MEM2,

Après avoir émis une requête REQ2, l'application cliente
■ attend la réponse du système de gestion,
■ traite entièrement la réponse inclus dans un laps de temps T,
■ et émet à nouveau une requête REQ3 au système de gestion, évitant ainsi un engorgement de l'application cliente.

De plus, la mémorisation des objets dont les états et/ou valeurs ont été modifiés dans une mémoire tampon MEM2 donne la possibilité au système de gestion de répondre à l'application dans un laps de temps R très inférieur au laps de temps T nécessaire au traitement d'une réponse par l'application cliente. Le laps de temps R sera d'autant plus petit que le réseau RES1 est un réseau à transmission rapide.

Selon l'invention, le laps de temps T est déterminé au niveau de l'application cliente.

La durée du laps de temps T correspond au moins au temps de traitement de la réponse issue du système de gestion incluant le temps de rafraîchissement de l'application graphique des objets qui ont été modifiés.

Selon une variante préférée de l'invention, si l'intervalle de temps entre les instants de mise à jour t_{*maj*} dans le serveur est grand par rapport à l'attente de réponse et au laps de temps, le laps de temps T peut aussi comprendre un laps de temps arbitraire dit attente de régulation. Ce temps de régulation permet à l'application cliente de finir éventuellement un travail indépendant de la requête en cours de traitement.

Selon une autre variante, par exemple si l'intervalle de temps entre les instants de mise à jour t_{*maj*} dans la serveur est petit par rapport à l'attente de réponse et au laps de temps, la durée du laps de temps fixé est de préférence égal au temps de traitement de la réponse par l'application cliente.

Selon une autre variante, la durée du laps de temps peut être fixée par un opérateur de l'application cliente en fonction du nombre d'objets maximum pouvant transiter entre la l'application cliente et le système de gestion.

D'une manière générale, la présente invention a pour objet un procédé d'optimisation du flux de données entre au moins une application cliente et au moins un système de gestion de requêtes incluant au moins un objet possédant des états et valeurs susceptibles d'être modifier, ladite application cliente émettant au moins deux requêtes successives d'interrogation d'états ou de valeurs d'objets inclus dans un système de gestion, la communication entre une application cliente et un système de gestion s'effectuant par l'intermédiaire d'un système de communication. Le procédé est caractérisé en ce que
- à l'initialisation, le système de gestion transmet à l'application cliente, sur demande de l'application cliente, un ensemble d'objets incluant tout ou partie des objets inclus dans le système de gestion,
- et suite à une requête d'interrogation de l'application cliente, le système de gestion transmet à l'application cliente les éventuelles modifications incluant les états et/ou valeurs d'au moins un objet de cet ensemble qui ont été modifiés,
- une autre requête d'interrogation de l'application cliente étant transmise après un laps de temps T déterminé donnant au moins la possibilité à l'application cliente de terminer le traitement de la réponse de la première requête.

On a vu que l'application cliente est maître du dialogue entre lui-même et le système de gestion et en ce que le système de gestion répond uniquement sur requête de l'application cliente. Avantageusement, l'application cliente émet une seule requête d'interrogation vers le système de gestion, lui demandant toutes les valeurs ou d'objets qui ont changé d'état depuis la dernière requête reçue par le système de gestion.

On a vu dans notre exemple que le système de gestion stocke dans au moins une mémoire une liste des objets du système de gestion incluant au moins les objets dont les états et/ou valeurs respectives ont été modifiées entre deux requêtes de l'application cliente et que, lorsqu'une requête de l'application cliente est émise, le système de gestion répondra par cette liste de valeurs ou états qui ont changé.

De préférence, à l'initialisation, l'ensemble d'objets incluant tout ou partie des objets inclus dans le système de gestion émis par le système de gestion à l'application cliente correspond aux objets que l'application cliente sélectionne dans le système de gestion lors de l'initialisation.

Le laps de temps T peut consister en un temps d'autorégulation qui permet à l'application cliente de terminer le traitement de la réponse de la première requête et de terminer d'autres tâches qui ne sont pas liées au traitement de cette réponse, il consiste à lancer la deuxième requête de telle façon que le traitement de la réponse liée à cette deuxième requête s'effectue après le traitement de la première réponse associée à la première requête.

Selon une variante, si l'intervalle de temps entre les instants de mise à jour t_{*maj*} de l'arbre de contenance dans la serveur est petit par rapport à l'attente de réponse et au laps de temps T, la durée du laps de temps fixé est égal au temps de traitement de la réponse par l'application cliente.

Il est donc clair que l'invention offre de nombreux avantages. En une seule requête, l'application cliente pourra avoir l'ensemble des valeurs ou états des objets qui ont changé. L'utilisation du système de communication entre l'application cliente et le système de gestion est donc optimisé. Cette invention se résume en une amélioration de la scrutation du côté client, qui consiste à auto réguler le flux de données entre le système de gestion et l'application cliente, et du côté système de gestion à optimiser la quantité de données envoyer vers l'application cliente par mémorisation dans une mémoire MEM2. L'attente de réponse avant l'émission d'une autre requête permet une autorégulation empêchant l'application cliente d'être engorgée par un flux trop important de réponses aux requêtes d'interrogation. La présente invention est simple, générale et permet une mise en oeuvre aisée dans une architecture client/serveur. Elle optimise le nombre de transferts de données entre l'application cliente et le système de gestion et soulage ainsi le système de communication entre l'application cliente et système de gestion, et permet aussi d'éviter un engorgement au sein de l'application cliente par son auto régulation.

## Revendications

1. Procédé d'optimisation du flux de données entre au moins une application cliente et au moins un système de gestion de requêtes incluant au moins un objet possédant des états et valeurs susceptibles d'être modifier, ladite application cliente émettant au moins deux requêtes successives d'interrogation d'états ou de valeurs d'objets inclus dans un système de gestion, la communication entre une application cliente et un système de gestion s'effectuant par l'intermédiaire d'un système de communication, caractérisé en ce que
- à l'initialisation, le système de gestion transmet à l'application cliente, sur demande de l'application cliente, un ensemble d'objets incluant tout ou partie des objets inclus dans le système de gestion,
- et suite à une requête d'interrogation de l'application cliente, le système de gestion transmet à l'application cliente les éventuelles modifications incluant les états et/ou valeurs d'au moins un objet de cet ensemble qui ont été modifiés,
- une autre requête d'interrogation de l'application cliente étant transmise après un laps de temps T déterminé donnant au moins la possibilité à l'application cliente de terminer le traitement de la réponse de la première requête.

2. Procédé selon la revendication 1, caractérisé en ce que l'application cliente est maître du dialogue entre lui-même et le système de gestion et en ce que le système de gestion répond uniquement sur requête de l'application cliente.

3. Procédé selon la revendication 1 ou 2, caractérisé en ce que l'application cliente émet une seule requête d'interrogation vers le système de gestion, lui demandant toutes les valeurs ou d'objets qui ont changé d'état depuis la dernière requête reçue par le système de gestion.

4. Procédé selon l'une des revendications 1 à 3, caractérisé en ce que le système de gestion stocke dans au moins une mémoire une liste des objets du système de gestion incluant au moins les objets dont les états et/ou valeurs respectives ont été modifiées entre deux requêtes de l'application cliente et en ce que, lorsqu'une requête de l'application cliente est émise, le système de gestion répondra par cette liste de valeurs ou états qui ont changé.

5. Procédé selon la revendication 1, caractérisé en ce que, à l'initialisation, l'ensemble d'objets incluant tout ou partie des objets inclus dans le système de gestion émis par le système de gestion à l'application cliente correspond aux objets que l'application cliente sélectionne dans le système de gestion lors de l'initialisation.

6. Procédé selon l'une des revendications 1 à 5, caractérisé en ce qu'il consiste à lancer la deuxième requête de telle façon que le traitement de la réponse liée à cette deuxième requête s'effectue après le traitement de la première réponse associée à la première requête.

7. Procédé selon. la revendication 1, caractérisé en ce que le laps de temps consiste en un temps d'autorégulation permettant à l'application cliente de terminer le traitement de la réponse de la première requête et de terminer d'autres tâches qui ne sont pas liées au traitement de cette réponse.

8. Procédé selon la revendication 1, caractérisé en ce que, si l'intervalle de temps entre les instants de mise à jour t_{*maj*} de l'arbre de contenance dans la serveur est petit par rapport à l'attente de réponse et au laps de temps T, la durée du laps de temps fixé est égal au temps de traitement de la réponse par l'application cliente.
